# EUROPÄISCHE PATENTSCHRIFT

(11) **EP 2 646 712 B1**
(45) Veröffentlichungstag und Bekanntmachung des Hinweises auf die Patenterteilung: **23.03.2016**
(21) Anmeldenummer: 11778914.9
(22) Anmeldetag: 07.11.2011
(51) Int. Cl.: F16H 57/02, F16H 1/08

(54) **ZAHNRADGETRIEBE MIT SCHRÄGVERZAHNUNG**
GEAR MECHANISM HAVING HELICAL TOOTHING
TRANSMISSION A ENGRENAGES A DENTURE HELICOIDALE

(30) Priorität: 02.12.2010 DE 102010062364
(43) Veröffentlichungstag der Anmeldung: 09.10.2013
(73) Patentinhaber: ZF Friedrichshafen AG, 88038 Friedrichshafen (DE)
(72) Erfinder: SOMSCHOR, Bernd, 88069 Tettnang (DE); MAHLER, Milos, 85653 Großhelfendorf (DE); PANOWITZ, Dieter, 88138 Sigmarszell (DE)
(86) Internationale Anmeldenummer: PCT/EP2011/069512
(87) Internationale Veröffentlichungsnummer: WO 2012/072373

(56) Entgegenhaltungen:
- DE-B- 1 215 463

## Beschreibung

Die Erfindung betrifft ein Zahnradgetriebe, umfassend mindestens zwei miteinander kämmende Stirnräder mit Schrägverzahnung nach dem Oberbegriff des Patentanspruches 1.

Bei Stirnradstufen mit Schrägverzahnung treten Axialkräfte auf, welche durch entsprechend dimensionierte Axiallager aufgenommen werden müssen. Hierfür werden häufig Kegelrollenlager verwendet, die einerseits relativ teuer sind und andererseits eine relativ hohe Wärmentwicklung aufweisen. Man hat daher bereits vorgeschlagen, anstelle der kostenaufwändigen Axiallager so genannte Druckkämme an den Stirnrädern mit Schrägverzahnung anzuordnen, wodurch die Axialkräfte aufgenommen werden. In dem Fachaufsatz "Hydrodynamische Axialkraftübertragung bei Wellen schnelllaufender Getriebe" von H. Langer, veröffentlicht in der Zeitschrift Konstruktion 34 (1982) Heft 12, Seite 473 - 478 sind derartige Druckkämme beschrieben. Der bekannte Druckkamm wird als separates, ringförmig ausgebildetes Einzelteil (Druckring) hergestellt und mit dem betreffenden Stirnrad gefügt, wobei die Befestigung zwischen Stirnrad und Druckring im Allgemeinen durch eine Schrumpfpassung erfolgt. Der Druckring, der mittig oder stirnseitig am Stirnrad befestigt wird, weist bevorzugt kegelförmig ausgebildete Anlaufflächen auf, welche sich an entsprechenden Anlaufflächen des Gegenrades, z. B. den Nutflanken einer Ringnut am Gegenrad abstützen. Zwischen den Anlaufflächen bildet sich ein Schmierfilm aus. Nachteilig bei den bekannten als zusätzliches Bauteil hergestellten Druckringen oder Druckkämmen ist die nicht immer zuverlässige Befestigung auf dem Stirnrad. Infolge Fliehkrafteinwirkung während des Betriebes kann es zu einem Lockern oder Lösen des Schrumpfsitzes kommen.

Durch die DE 1 215 463 wurde ein Zahnradgetriebe mit einem schräg verzahnten Ritzel bekannt, auf welches mittig ein Ring mit konischen Anlageflächen aufgeschrumpft ist. Die konischen Anlageflächen laufen gegen Nutflanken einer Ringnut, welche mittig in den beiden Gegenrädern, die mit dem Ritzel kämmen, angeordnet sind. Der Ring, der auch als Druckkamm bezeichnet werden kann, nimmt die aus der Schrägverzahnung resultierenden Axialkräfte auf, sodass entsprechende Axiallager entfallen können.

Es ist Aufgabe der vorliegenden Erfindung, ein Zahnradgetriebe der eingangs genannten Art derart auszubilden, dass die aus der Schrägverzahnung resultierenden Axialkräfte möglichst ohne Axiallager sicher und dauerhaft aufgenommen werden können.

Die Aufgabe der Erfindung wird durch die Merkmale des unabhängigen Patentanspruches 1 gelöst. Vorteilhafte Ausgestaltungen ergeben sich aus den Unteransprüchen.

Erfindungsgemäß ist bei dem ersten Stirnrad mindestens eine Überhöhung des Zahnprofils über den Kopfkreis hinaus vorgesehen, wobei sich die Überhöhung partiell über einen oder mehrere Bereiche der Zahnbreite erstreckt. Durch die Überhöhung des Zahnprofils, d. h. der Verzahnung ergibt sich ein zugespitztes Zahnprofil, welches im Bereich der Überhöhung mindestens eine seitliche Anlauffläche aufweist. Durch die Überhöhung des Zahnprofils können die aus der Schrägverzahnung resultierenden Axialkräfte innerhalb der Stirnradstufe aufgenommen werden, indem sich die mindestens eine Anlauffläche am ersten Stirnrad an einer korrespondierenden Anlauffläche am zweiten Stirnrad in axialer Richtung abstützt. Eine Paarung von Anlaufflächen am ersten und am zweiten Stirnrad führt zu einer Abstützung in einer axialen Richtung, während zwei Paarungen von Anlaufflächen am ersten und am zweiten Stirnrad zu einer Abstützung in beiden axialen Richtungen führen. Die Überhöhung des Zahnprofils führt zu einer Überdeckung beider Stirnräder in axialer Richtung. Dadurch können aufwändige Axiallager, z. B. Kegelrollenlager entfallen, was die Herstellungskosten eines solchen Zahnradgetriebes erheblich senkt. Im Gegensatz zum eingangs genannten Stand der Technik sind die Überhöhungen an jedem einzelnen Zahnprofil, d. h. am Zahnkopf einstückig mit der Verzahnung bzw. dem Stirnrad oder Zahnkranz ausgebildet. Es wird zunächst eine Verzahnung mit über die gesamte Zahnbreite durchgehender Überhöhung hergestellt, und anschließend wird das über den Kopfkreis hinausstehende Material spangebend teilweise abgetragen, z. B. abgedreht, sodass partielle Überhöhungen stehen bleiben. Vorteilhaft bei dieser einstückigen Ausbildung ist, dass kein zusätzliches Bauteil zur Aufnahme der Axialkräfte in Form eines zusätzlichen ringförmigen Druckkammes benötigt wird, der sich unter der betrieblichen Beanspruchung lockern oder lösen könnte. Insofern ist die erfindungsgemäße Lösung sicherer und dauerhafter.

Nach einer bevorzugten Ausführungsform ist die mindestens eine Überhöhung innerhalb der Zahnbreite angeordnet: Beispielsweise kann eine Überhöhung in der Mitte der Zahnbreite angeordnet oder es können mehrere Überhöhungen über den Bereich der Zahnbreite vorgesehen sein. Jeder Überhöhung ist eine Ringnut am zweiten Stirnrad zugeordnet, in welche die Überhöhung am Zahnprofil eingreift und damit eine Überdeckung in axialer Richtung herstellt. Die Ringnut bildet mit ihren Nutflanken die Anlaufflächen für die an den Überhöhungen angeordneten Anlaufflächen.

Nach einer weiteren bevorzugten Ausführungsform sind nur an den Stirnseiten des ersten Stirnrades Überhöhungen vorgesehen, welche das zweite Stirnrad umfassen. Am zweiten Stirnrad ist dann keine Ringnut erforderlich, sondern lediglich stirnseitig angeordnete Anlaufflächen, welche mit den Anlaufflächen an den Überhöhungen zwei Paarungen bilden, welche die Axialkräfte in beiden Richtungen aufnehmen. Die Anlaufflächen können plan, konisch oder ballig ausgebildet sein. Wie aus dem eingangs genannten Stand der Technik bekannt, bildet sich zwischen den Anlaufflächen vom ersten und zweiten Stirnrad ein Schmierfilm aus.

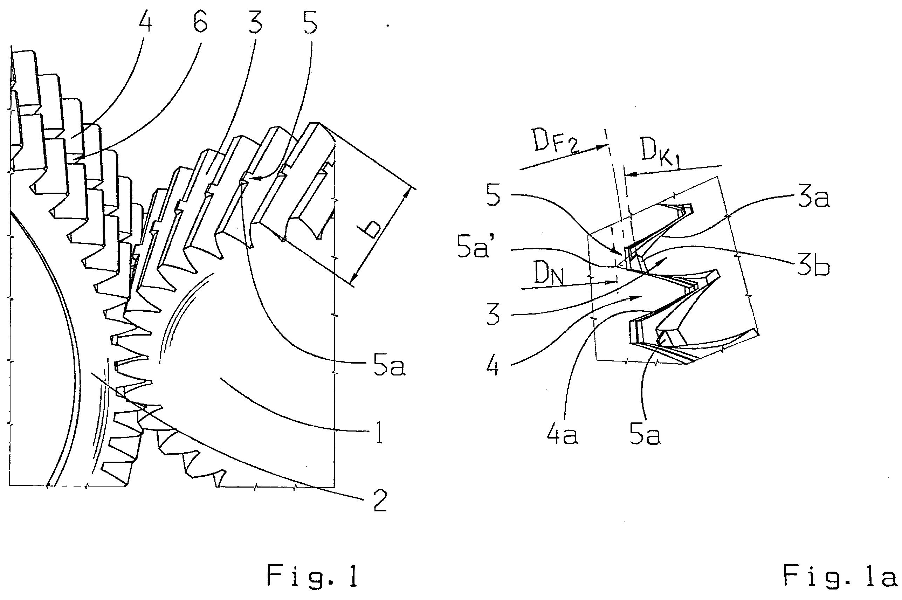

Ein Ausführungsbeispiel der Erfindung ist in der Zeichnung dargestellt und wird im Folgenden näher beschrieben. Es zeigen
- Fig. 1: einen Ausschnitt einer erfindungsgemäßen Stirnradstufe in perspektivischer Darstellung und
- Fig. 1a: einen vergrößerten Ausschnitt des Zahneingriffes beider Stirnräder.

Fig. 1 zeigt ein erstes Zahnrad 1 und ein zweites Zahnrad 2, welche jeweils eine Schrägverzahnung 3, 4 aufweisen. Die beiden Zahnräder 1, 2, auch Stirnräder 1, 2 genannt, stehen miteinander in Eingriff und erzeugen aufgrund der Schrägverzahnung Axialkräfte. Beide Stirnräder 1, 2 weisen jeweils eine etwa gleichgroße Zahnbreite b auf. Am ersten Stirnrad 1 ist die Schrägverzahnung 3, im Folgenden auch kurz Verzahnung 3 genannt, im mittleren Bereich der Zahnbreite b überhöht, sodass prismatische Körper 5 ausgebildet werden, welche wie dachförmige Reiter oder Zacken auf den Zahnköpfen angeordnet sind. Die prismatischen Körper 5, allgemein auch Überhöhungen 5 genannt, weisen beiderseits Anlaufflächen 5a auf, welche in Fig. 1 a vergrößert dargestellt sind. In der Zeichnung sind jeweils nur die vorderen Anlaufflächen 5a erkennbar. Korrespondierend zu den Überhöhungen 5 am ersten Stirnrad 1 ist im zweiten Stirnrad 2 eine umlaufende Nut 6, auch Ringnut 6 genannt, eingearbeitet, in welche die Überhöhungen 5 eingreifen.

Fig. 1 a zeigt den Eingriff der beiden Stirnverzahnungen 3, 4 des ersten und des zweiten Stirnrades 1, 2 in einer Ansicht in axialer Richtung. Ein Zahn der Schrägverzahnung 3 weist ein Zahnprofil 3a mit einem Zahnkopf 3b und einem Kopfkreisdurchmesser D_{K1} auf. Die Verzahnung 4 des zweiten Stirnrades 2 weist ein Zahnprofil 4a mit einem Fußkreisdurchmesser D_{F2} auf. Die in das zweite Stirnrad 2 eingearbeitete Ringnut 6 erstreckt sich in radialer Richtung über den Fußkreisdurchmesser D_{F2} nach innen und weist einen gestrichelt dargestellten Nutgrunddurchmesser D_{N} auf, wobei D_{N} < D_{F2} ist. Auf dem Zahnkopf 3b des ersten Stirnrades 1 ist die Überhöhung in Form des prismatischen Körpers 5 angeordnet, welcher in Fig. 1 a etwa die Form eines gleichseitigen Dreiecks aufweist. Im Bereich der Ringnut 6 ergibt sich durch den über den Fußkreisdurchmesser D_{F2} hineinragenden prismatischen Körper 5 eine Überdeckung 5a' in axialer Richtung, über welche die Axialkräfte übertragen werden. Die auf den Zahnköpfen 3b angeordneten prismatischen Körper 5 sind einstückig mit der Stirnverzahnung 3 hergestellt, wobei letztere einstückig mit dem ersten Stirnrad 1 oder als Zahnkranz ausgebildet sein kann. Man stellt also vorzugsweise zunächst eine Stirnverzahnung mit einem vorläufigen Kopfkreisdurchmesser her, der größer als der Kopfkreisdurchmesser D_{K2} der fertigen Schrägverzahnung 3 ist. Anschließend wird das Material beiderseits der Zacken 5 spangebend abgetragen, z. B. durch Abdrehen. Die Überhöhungen 5 bleiben dann - wie in Fig. 1 dargestellt - stehen.

Die in Fig. 1 und Fig. 1 a dargestellte Ausführungsform stellt eine von mehreren erfindungsgemäßen Lösungen dar. Möglich - jedoch nicht dargestellt - ist z. B. auch, dass mehrere Überhöhungen oder prismatische Körper in Richtung der Zahnbreite b vorgesehen werden, welche in entsprechende Ringnuten am zweiten Stirnrad eingreifen. Damit kann eine größere Überdeckungsfläche zur Übertragung der Axialkräfte geschaffen werden. Möglich ist es jedoch auch, die Überhöhungen stirnseitig am ersten Stirnrad 2 anzuordnen, wobei die Überhöhungen jeweils nur eine nach innen gerichtete Anlagefläche aufweisen und das zweite Stirnrad von außen umgreifen. Damit ist ein hinsichtlich der auftretenden Axialkräfte geschlossener Kraftfluss innerhalb der Stirnradstufe geschaffen.

### Bezugszeichen

- 1: erstes Stirnrad
- 2: zweites Stirnrad
- 3: Schrägverzahnung
- 3a: Zahnprofil
- 3b: Zahnkopf
- 4: Schrägverzahnung
- 4a: Zahnprofil
- 5: Überhöhung (prismatischer Körper)
- 5a: Anlauffläche
- 5a': Überdeckung
- 6: Ringnut

- b: Zahnbreite
- D_{K1}: Kopfkreisdurchmesser, Rad 1
- D_{F2}: Fußkreisdurchmesser, Rad 2
- D_{N}: Nutgrunddurchmesser, Rad 2

## Patentansprüche

1. Zahnradgetriebe, umfassend mindestens zwei miteinander kämmende, eine Zahnbreite (b) aufweisende Stirnräder (1, 2) mit Schrägverzahnungen (3, 4), wobei ein erstes Stirnrad (1) ein Zahnprofil (3a) mit einem Kopfkreisdurchmesser (D_{K1}) und ein zweites Stirnrad (2) ein Zahnprofil (4a) mit einem Fußkreisdurchmesser (D_{F2}) aufweisen, **dadurch gekennzeichnet, dass** das erste Stirnrad (1) mindestens eine sich partiell über die Zahnbreite erstreckende Überhöhung (5) des Zahnprofils (3a) über den Kopfkreisdurchmesser (D_{K1}) hinaus aufweist und dass die mindestens eine Überhöhung (5) mindestens eine Anlauffläche (5a) in axialer Richtung aufweist.

2. Zahnradgetriebe nach Anspruch 1, **dadurch gekennzeichnet, dass** die mindestens eine Überhöhung (5) innerhalb der Zahnbreite (b) angeordnet und dass der mindestens einen Überhöhung (5) am zweiten Stirnrad (2) eine Ringnut (6) zugeordnet ist, deren Nutflanken Anlaufflächen bilden.

3. Zahnradgetriebe nach Anspruch 2, **dadurch gekennzeichnet, dass** die Ringnut (6) einen Nutgrunddurchmesser (D_{N}) aufweist, der kleiner als der Fußkreisdurchmesser (D_{F2}) ist.

4. Zahnradgetriebe nach Anspruch 2 oder 3, **dadurch gekennzeichnet, dass** die Überhöhung (5) und die korrespondierende Ringnut (6) etwa in der Mitte der Zahnbreite (b) angeordnet sind und Anlaufflächen (5a) auf beiden Seiten aufweisen.

5. Zahnradgetriebe nach Anspruch 1, **dadurch gekennzeichnet, dass** die mindestens eine Überhöhung (5) am ersten Stirnrad (1) stirnseitig angeordnet ist und das zweite Stirnrad (2) umfassen.

6. Zahnradgetriebe nach einem der Ansprüche 1 bis 5, **dadurch gekennzeichnet, dass** die mindestens eine Überhöhung (5) als prismatischer Körper (5) ausgebildet ist.

7. Zahnradgetriebe nach einem der Ansprüche 1 bis 6, **dadurch gekennzeichnet, dass** die mindestens eine Überhöhung (5) einstückig mit der Schrägverzahnung (3) ausgebildet ist.

## Claims

1. Gearwheel mechanism, comprising at least two intermeshing spur gears (1, 2) which have a tooth width (b) and helical toothings (3, 4), wherein a first spur gear (1) has a tooth profile (3a) with a tip circle diameter (D_{K1}) and a second spur gear (2) has a tooth profile (4a) with a root circle diameter (D_{F2}), **characterized in that** the first spur gear (1) has at least one elevation (5) of the tooth profile (3a) beyond the tip circle diameter (D_{K1}), which elevation extends over a part of the tooth width, and **in that** the at least one elevation (5) has at least one abutment surface (5a) in an axial direction.

2. Gearwheel mechanism according to Claim 1, **characterized in that** the at least one elevation (5) is arranged within the tooth width (b), and **in that** the at least one elevation (5) is assigned, on the second spur gear (2), a ring-shaped groove (6), the groove flanks of which form abutment surfaces.

3. Gearwheel mechanism according to Claim 2, **characterized in that** the ring-shaped groove (6) has a groove base diameter (D_{N}) which is smaller than the root circle diameter (D_{F2}).

4. Gearwheel mechanism according to Claim 2 or 3, **characterized in that** the elevation (5) and the corresponding ring-shaped groove (6) are arranged approximately in the middle of the tooth width (b), and have the abutment surfaces (5a) on both sides.

5. Gearwheel mechanism according to Claim 1, **characterized in that** the at least one elevation (5) is arranged at the face side on the first spur gear (1), and engage around the second spur gear (2).

6. Gearwheel mechanism according to one of Claims 1 to 5, **characterized in that** the at least one elevation (5) is in the form of a prismatic body (5).

7. Gearwheel mechanism according to one of Claims 1 to 6, **characterized in that** the at least one elevation (5) is formed integrally with the helical toothing (3).

## Revendications

1. Transmission à engrenages, comprenant au moins deux pignons droits (1, 2) à dentures hélicoïdales (3, 4) présentant une largeur de dent (b), un premier pignon droit (1) présentant un profil de dent (3a) avec un diamètre de cercle de tête (D_{K1}) et un deuxième pignon droit (2) présentant un profil de dent (4a) avec un diamètre de cercle de base (D_{F2}), **caractérisée en ce que** le premier pignon droit (1) présente au moins un rehaussement (5) du profil de dent (3a) s'étendant en partie sur la largeur de dent au-delà du diamètre de cercle de tête (D_{K1}) et **en ce que** l'au moins un rehaussement (5) présente au moins une surface de montée (5a) dans la direction axiale.

2. Transmission à engrenages selon la revendication 1, **caractérisée en ce que** l'au moins un rehaussement (5) est disposé à l'intérieur de la largeur de dent (b) et **en ce que** l'au moins un rehaussement (5) est associé au niveau du deuxième pignon droit (2) à une rainure annulaire (6) dont les flancs de rainure forment des surfaces de montée.

3. Transmission à engrenages selon la revendication 2, **caractérisée en ce que** la rainure annulaire (2) présente un diamètre de base de rainure (D_{N}) qui est inférieur au diamètre de cercle de base (D_{F2}).

4. Transmission à engrenages selon la revendication 2 ou 3, **caractérisée en ce que** le rehaussement (5) et la rainure annulaire correspondante (6) sont disposés approximativement au milieu de la largeur de dent (b) et présentent des surfaces de montée (5a) des deux côtés.

5. Transmission à engrenages selon la revendication 1, **caractérisée en ce que** l'au moins un rehaussement (5) est disposé du côté frontal au niveau du premier pignon droit (1) et font le tour du deuxième pignon droit (2).

6. Transmission à engrenages selon l'une quelconque des revendications 1 à 5, **caractérisée en ce que** l'au moins un rehaussement (5) est réalisé sous forme de corps prismatique (5).

7. Transmission à engrenages selon l'une quelconque des revendications 1 à 6, **caractérisée en ce que** l'au moins un rehaussement (5) est réalisé d'une seule pièce avec la denture hélicoïdale (3).
